# EUROPEAN PATENT SPECIFICATION

(11) **EP 3 512 284 B1**
(45) Date of publication and mention of the grant of the patent: **07.09.2022**
(21) Application number: 17922907.5
(22) Date of filing: 09.11.2017
(51) Int. Cl.: H04W 72/04, H04W 48/12

(54) **METHOD FOR DETERMINING TIME AT WHICH RRC SIGNALING TAKES EFFECT AND TERMINAL,**
VERFAHREN ZUR BESTIMMUNG DES ZEITPUNKTS DER WIRKSAMKEIT DER RRC-SIGNALISIERUNG UND ENDGERÄT,
PROCÉDÉ PERMETTANT DE DÉTERMINER LE MOMENT AUQUEL UNE SIGNALISATION RRC A LIEU ET TERMINAL

(43) Date of publication of application: 17.07.2019
(73) Proprietor: GUANGDONG OPPO MOBILE TELECOMMUNICATIONS CORP., LTD., Wusha, Chang'an Dongguan, Guangdong 523860 (CN)
(72) Inventor: SHEN, Jia, Dongguan Guangdong 523860 (CN)
(74) Representative: Manitz Finsterwald Patent- und Rechtsanwaltspartnerschaft mbB
(86) International application number: PCT/CN2017/110276
(87) International publication number: WO 2019/090641

(56) References cited:
- CN-A- 101 909 356
- CN-A- 102 932 111
- CN-A- 103 687 019
- US-A1- 2014 269 585
- US-A1- 2015 139 144
- GUANGDONG OPPO MOBILE TELECOM: "Remaining issues on bandwidth part configuration and activation", 3GPP DRAFT; R1-1715692, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nagoya, Japan; 20170918 - 20170921 17 September 2017 (2017-09-17), XP051339154, Retrieved from the Internet: URL:http://www.3gpp.org/ftp/Meetings_3GPP_ SYNC/RAN1/Docs/ [retrieved on 2017-09-17]
- HUAWEI ET AL: "Signaling mechanisms for TDD eIMTA", 3GPP DRAFT; R1-130883, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Chicago, USA; 20130415 - 20130419 6 April 2013 (2013-04-06), XP050696884, Retrieved from the Internet: URL:http://www.3gpp.org/ftp/tsg_ran/WG1_RL 1/TSGR1_72b/Docs/ [retrieved on 2013-04-06]
- SAMSUNG: "Summary on A.I. 7.1.2.3: Remaining details on other system information delivery", 3GPP DRAFT; R1-1718792-SUMMARY ON AI 7.1.2.3 OSI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, CZ; 20171009 - 20171013 11 October 2017 (2017-10-11), XP051353340, Retrieved from the Internet: URL:http://www.3gpp.org/ftp/tsg_ran/WG1_RL 1/TSGR1_90b/Docs/ [retrieved on 2017-10-11]

## Description

### Technical Field

The present disclosure relates to wireless communication technology, and specifically, to a method for determining time of taking effect of Radio Resource Control (RRC) signaling, and a terminal.

### Background

In a Long Term Evolution (LTE) system, time of taking effect of RRC signaling is fixed. Taking the time of taking effect being 8 milliseconds as an example, a terminal receives RRC signaling sent by a base station at subframe n, then the RRC signaling takes effect at subframe n+8. However, in a New Radio (NR) system, various service scenes need to be considered. For services with different delay requirements, flexible configuration for the time of taking effect of RRC signaling is needed, so as to adapt to requirements of different services.

Related technologies are known from GUANGDONG OPPO MOBILE TELECOM: "Remaining issues on bandwidth part configuration and activation", 3GPP DRAFT; R1-1715692, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE vol. RAN WG1, no. Nagoya, Japan; 20170918 - 20170921 17 September 2017 (2017-09-17).

Document US 2014/269585 A1 discloses a method and apparatus for reconfiguring a user equipment configured for multi-carrier operation from a first downlink control information set to a second downlink control information set while carrier aggregation is being used, including receiving a physical downlink control channel with downlink control information formats containing a carrier indicator field.

### Summary

The invention is set out in the appended set of claims.

### Brief Description of Drawings

FIG. 1 is a schematic flowchart of a method for determining time of taking effect of RRC signaling of Example One of the present disclosure;
FIG. 2 is a schematic flowchart of a method for determining time of taking effect of RRC signaling of Example Two of the present disclosure;
FIG. 3 is a structural schematic diagram of a base station of an implementation of the present disclosure;
FIG. 4 is a structural schematic diagram of a terminal of an implementation of the present disclosure;
FIG. 5 is a structural schematic diagram of hardware of a terminal of an implementation of the present disclosure.

### Detailed Description

The present disclosure will be described in further detail below with reference to the accompanying drawings and specific implementations.

### Example One

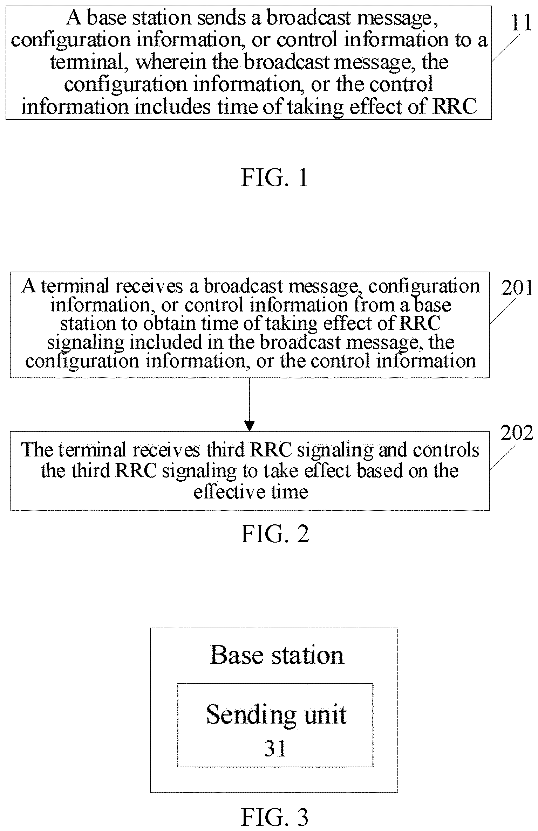

An implementation of the present disclosure provides a method for determining time of taking effect of RRC signaling. FIG. 1 is a schematic flowchart of a method for determining time of taking effect of RRC signaling of Example one of the present disclosure. As shown in FIG. 1, the method includes act 11.

In act 11, a base station sends a broadcast message, configuration information, or control information to a terminal, wherein the broadcast message, the configuration information, or the control information includes time of taking effect of RRC signaling.

In the implementation of the present disclosure, the base station configures parameters of a Control Resource Set (CORESET) through the RRC signaling, wherein the CORESET occupies 1 to 3 symbols in a time domain and a configurable bandwidth in a frequency domain. When the base station is to send a Physical Downlink Shared Channel (PDSCH) to the terminal, the Physical Downlink Control Channel (PDCCH) is used as scheduling information of the PDSCH to be sent in the corresponding CORESET. Based on this, how to flexibly configure the time of taking effect of the RRC signaling to adapt to requirements of various services seems particularly important.

In the implementation of the present disclosure, as a first implementation mode, sending, by the base station, the broadcast message to the terminal, includes: sending, by the base station, PBCH information to the terminal, wherein the PBCH information includes the time of taking effect of the RRC signaling.

As a second implementation mode, sending, by the base station, the broadcast message to the terminal, includes: sending, by the base station, RMSI to the terminal, wherein the RMSI includes the time of taking effect of the RRC signaling.

As a third implementation mode, sending, by the base station, the broadcast message to the terminal, includes: sending, by the base station, OSI to the terminal, wherein the OSI includes the time of taking effect of the RRC signaling.

As a fourth implementation mode, sending, by the base station, the configuration information to the terminal, includes: sending, by the base station, first RRC signaling to the terminal, wherein the first RRC signaling includes the time of taking effect of second RRC signaling; the second RRC signaling is RRC signaling sent after the first RRC signaling. It may be understood that, the time of taking effect of the first RRC signaling may still be a preset fixed time of taking effect, for example, 8 milliseconds. However, after sending the first RRC signaling, all RRC signaling sent by the base station may be denoted as the second RRC signaling, the time of taking effect of the second RRC signaling is the time of taking effect of the second RRC signaling included in the first RRC signaling.

As a fifth implementation mode, sending, by the base station, the control information to the terminal, includes: sending, by the base station, control signaling to the terminal, wherein the control signaling includes the time of taking effect of the RRC signaling.

By adopting technical solutions of the implementation of the present disclosure, the time of taking effect of the RRC signaling is flexibly configured through the broadcast message, the configuration information, or the control information, so as to adapt to time delay requirements of different services.

### Example Two

An implementation of the present disclosure also provides a method for determining time of taking effect of RRC signaling. FIG. 2 is a schematic flowchart of a method for determining time of taking effect of RRC signaling of Example Two of the present disclosure. As shown in FIG. 2, the method includes act 201 and act 202.

In act 201, a terminal receives a broadcast message, configuration information or control information from a base station to obtain time of taking effect of RRC signaling included in the broadcast message, the configuration information, or the control information.

In act 202, the terminal receives third RRC signaling, and controls the third RRC signaling to take effect based on the time of taking effect.

In the implementation of the present disclosure, as a first implementation mode, receiving, by the terminal, the broadcast message, the configuration information, or the control information from the base station to obtain the time of taking effect of the RRC signaling included in the broadcast message, the configuration information, or the control information, includes: receiving, by the terminal, PBCH information from the base station to obtain the time of taking effect of the RRC signaling included in the PBCH information. It may be understood that, the terminal receives the PBCH used as the broadcast message from the base station to obtain the time of taking effect of the RRC signaling included in the PBCH information.

As a second implementation mode, receiving, by the terminal, the broadcast message, the configuration information, or the control information from the base station to obtain the time of taking effect of the RRC signaling included in the broadcast message, the configuration information, or the control information, includes: receiving, by the terminal, RMSI from the base station to obtain the time of taking effect of the RRC signaling included in the RMSI. It may be understood that, the terminal receives the RMSI from the base station to obtain the time of taking effect of the RRC signaling included in the RMSI information.

As a third implementation mode, receiving, by the terminal, the broadcast message, the configuration information, or the control information from the base station to obtain the time of taking effect of the RRC signaling included in the broadcast message, the configuration information, or the control information, includes: receiving, by the terminal, OSI from the base station to obtain the time of taking effect of the RRC signaling included in the OSI. It may be understood that, the terminal receives the OSI used as the broadcast message from the base station to obtain the time of taking effect of the RRC signaling included in the OSI information.

As a fourth implementation mode, receiving, by the terminal, the broadcast message, the configuration information, or the control information from the base station to obtain the time of taking effect of the RRC signaling included in the broadcast message, the configuration information, or the control information, includes: receiving, by the terminal, fourth RRC signaling from the base station to obtain the time of taking effect of the RRC signaling included in the fourth RRC signaling. It may be understood that, the terminal receives the fourth RRC signaling used as the configuration information from the base station to obtain the time of taking effect of the RRC signaling included in the fourth RRC signaling.

The time of taking effect of the fourth RRC signaling may still be a preset fixed time of taking effect, for example, 8 milliseconds. However, all RRC signaling received by the terminal after receiving the fourth RRC signaling may be denoted as the third RRC signaling, wherein the time of taking effect of the third RRC signaling is the time of taking effect of the RRC signaling included in the fourth RRC signaling.

As a fifth implementation mode, receiving, by the terminal, the broadcast message, the configuration information, or the control information from the base station to obtain the time of taking effect of the RRC signaling included in the broadcast message, the configuration information, or the control information, includes: receiving, by the terminal, control signaling from the base station to obtain the time of taking effect of the RRC signaling included in the control signaling. It may be understood that, the terminal receives the control signaling used as the control message from the base station to obtain the time of taking effect of the RRC signaling included in the control signaling.

By adopting the technical solutions of implementations of the present disclosure, the time of taking effect of the RRC signaling is flexibly configured through the broadcast message, the configuration information, or the control information, so as to adapt to the time delay requirements of different services.

### Example Three

An implementation of the present disclosure also provides a base station. FIG. 3 is a structural schematic diagram of a base station of an implementation of the present disclosure. As shown in FIG. 3, the base station includes a sending unit 31 configured to send a broadcast message, configuration information, or control information to a terminal, wherein the broadcast message, the configuration information, or the control information includes time of taking effect of RRC signaling.

As a first implementation mode, the sending unit 31 is configured to send PBCH information to the terminal, wherein the PBCH information includes the time of taking effect of the RRC signaling.

As a second implementation mode, the sending unit 31 is configured to send Residual Minimization System Information (RMSI) to the terminal, wherein the RMSI includes the time of taking effect of the RRC signaling.

As a third implementation mode, the sending unit 31 is configured to send Other System Information (OSI) to the terminal, wherein the OSI includes the time of taking effect of the RRC signaling.

As a fourth implementation mode, the sending unit 31 is configured to send first RRC signaling to the terminal, wherein the first RRC signaling includes the time of taking effect of second RRC signaling; the second RRC signaling is RRC signaling sent after the first RRC signaling.

As a fifth implementation mode, the sending unit 31 is configured to send control signaling to the terminal, wherein the control signaling includes the time of taking effect of the RRC signaling.

In the implementation of the present disclosure, the signaling sending unit 31 in the base station may be implemented through a communication module group (including: a basic communication kit, an operating system, a communication module, a standardized interface and protocol, etc.) and a Transmitting/Receiving antenna in a practical application.

It should be noted that, when describing that the base station provided in the above implementation determines the time of taking effect of the RRC signaling, it is only illustrated by the division of the aforementioned program modules. In a practical application, the aforementioned processing may be allocated to be accomplished by different program modules as needed, that is, the internal structure of the base station may be divided into different program modules to accomplish all or part of the aforementioned processing. In addition, the base station and the method for determining the time of taking effect of the RRC signaling provided by the aforementioned implementations belong to the same concept, wherein the specific realization process of the base station provided by the aforementioned implementation may be referred to the method implementation in detail and will not be repeated here.

### Example Four

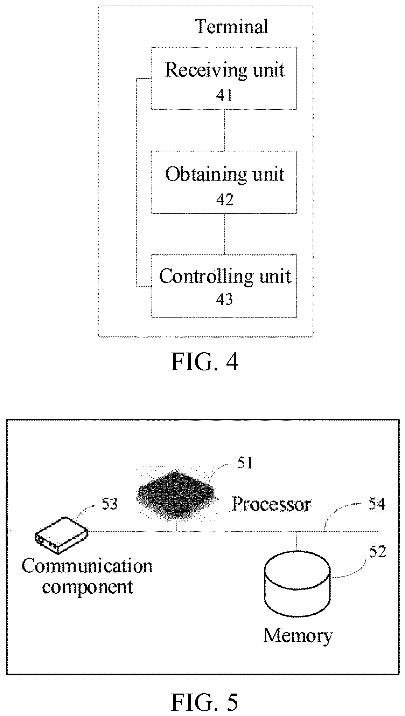

An implementation of the present disclosure also provides a terminal. FIG. 4 is a structural schematic diagram of a terminal of the implementation of the present disclosure. As shown in FIG. 4, the terminal includes a receiving unit 41, an obtaining unit 42 and a controlling unit 43.

The receiving unit 41 is configured to receive a broadcast message, configuration information, or control information from a base station; and is further configured to receive third RRC signaling.

The obtaining unit 42 is configured to obtain time of taking effect of RRC signaling included in the broadcast message, the configuration information, or the control information received by the receiving unit 41.

The controlling unit 43 is configured to control the third RRC signaling received by the receiving unit 41 to take effect based on the time of taking effect obtained by the obtaining unit 42.

As a first implementation mode, the receiving unit 41 is used for receiving PBCH information from the base station; the obtaining unit 42 is configured to obtain the time of taking effect of the RRC signaling included in the PBCH information received by the receiving unit 41.

As a second implementation mode, the receiving unit 41 is used for receiving RMSI from the base station; the obtaining unit 42 is configured to obtain the time of taking effect of the RRC signaling included in the RMSI received by the receiving unit 41.

As a third implementation mode, the receiving unit 41 is used for receiving OSI from the base station; the obtaining unit 42 is configured to obtain the time of taking effect of the RRC signaling included in the OSI received by the receiving unit 41.

As a fourth implementation mode, the receiving unit 41 is used for receiving fourth RRC signaling from the base station; the obtaining unit 42 is configured to obtain the time of taking effect of the RRC signaling included in the fourth RRC signaling received by the receiving unit 41.

As a fifth implementation mode, the receiving unit 41 is used for receiving control signaling from the base station; the obtaining unit 42 is configured to obtain the time of taking effect of the RRC signaling included in the control signaling received by the receiving unit 41.

In the implementation of the present disclosure, the obtaining unit 42 and the controlling unit 43 in the terminal may be implemented by a Central Processing Unit (CPU), a Digital Signal Processor (DSP), a Microcontroller Unit 43 (MCU) or a Field-Programmable Gate Array (FPGA) in the terminal in a practical application. The receiving unit 41 in the terminal may be implemented through a communication module group (including: a basic communication kit, an operating system, a communication module, a standardized interface and protocol, etc.) and a Transmitting/Receiving antenna in a practical application.

It should be noted that, when describing that the terminal provided in the above implementation determines the time of taking effect of the RRC signaling, it is only illustrated by the division of the aforementioned program modules. In a practical application, the aforementioned processing may be allocated to be accomplished by different program modules as needed, that is, the internal structure of the terminal may be divided into different program modules to accomplish all or part of the aforementioned processing. In addition, the terminal and the method for determining the time of taking effect of the RRC signaling provided by the aforementioned implementations belong to the same concept, wherein the specific realization process of the terminal provided by the aforementioned implementation may be referred to the method implementation in detail and will not be repeated here.

### Example Five

An implementation of the present disclosure also provides a terminal. FIG. 5 is a structural schematic diagram of hardware of a terminal of an implementation of the present disclosure. As shown in FIG. 5, the terminal includes a communication component 53 for data transmission, at least one processor 51, and a memory 52 for storing a computer program capable of running on the processor 51. The various components in the terminal are coupled together by a bus system 54. It may be understood that the bus system 54 is used for implementing connection communication between these components. The bus system 54 includes a power bus, a control bus, and a status signal bus besides a data bus. However, for sake of conciseness, various buses are all denoted as the bus system 54 in FIG. 5.

It may be understood that the memory 52 may be a transitory memory or a non-transitory memory, or may include both a transitory and non-transitory memory. The non-transitory memory may be a Read Only Memory (ROM), a Programmable Read-Only Memory (PROM), an Erasable Programmable Read-Only Memory (EPROM), an Electrically Erasable Programmable Read-Only Memory (EEPROM), a ferromagnetic random access memory (FRAM), a Flash Memory, a magnetic surface memory, a compact disk, or a Compact Disc Read-Only Memory (CD-ROM); the magnetic surface memory may be a magnetic disk memory or a magnetic tape memory. The transitory memory may be a Random Access Memory (RAM) which serves as an external cache. By way of illustrative but not restrictive illustrations, many forms of RAMs are available, such as Static Random Access Memory (SRAM), Synchronous Static Random Access Memory (SSRAM), Dynamic Random Access Memory (DRAM), Synchronous Dynamic Random Access Memory (SDRAM), Double Data Rate Synchronous Dynamic Random Access Memory (DDRSDRAM), Enhanced Synchronous Dynamic Random Access Memory (ESDRAM), SyncLink Dynamic Random Access Memory (SLDRAM), Direct Rambus Random Access Memory (DRRAM). The memory 52 described in an implementation of the present disclosure is intended to include, but is not limited to, these and any other suitable types of memories.

The methods disclosed in the above implementations of the present disclosure may be applied to or implemented by the processor 51. The processor 51 may be an integrated circuit chip with a signal processing capability. In a realization process, acts of the methods described above may be accomplished by integrated logic circuits of hardware in the processor 51 or instructions in the form of software. The processor 51 described above may be a general purpose processor, a DSP or other programmable logic devices, discrete gate or transistor logic devices, discrete hardware components, etc. The processor 51 may implement or execute the disclosed methods, acts and logical block diagrams in the implementations of the present disclosure. The general purpose processor may be a microprocessor or any conventional processor or the like. The acts of the methods disclosed in combination with the implementations of the present disclosure may be directly embodied as to be executed and accomplished by a hardware decoding processor or by a combination of hardware and software modules in a decoding processor. The software module may be located in a storage medium, the storage medium is located in the memory 52. The processor 51 reads information in the memory 52 and accomplishes the acts of the aforementioned methods in combination with hardware of the processor 51.

In an exemplary implementation, the terminal may be implemented by one or more Application Specific Integrated Circuits (ASICs), DSPs, Programmable Logic Devices (PLDs), Complex Programmable Logic Devices (CPLDs), FPGAs, general-purpose processors, controllers, MCUs, Microprocessors or other electronic components, for executing the aforementioned methods.

In this implementation, the processor 51 is used for, when running the computer program, executing the following acts: receiving a broadcast message, configuration information, or control information from a base station to obtain time of taking effect of RRC signaling included in the broadcast message, the configuration information, or the control information; receiving third RRC signaling, and controlling the third RRC signaling to take effect based on the time of taking effect.

As a first implementation mode, the processor 51 is used for, when running the computer program, executing the following act: receiving PBCH information from the base station to obtain the time of taking effect of the RRC signaling included in the PBCH information.

As a second implementation mode, the processor 51 is used for, when running the computer program, executing the following act: receiving RMSI from the base station to obtain the time of taking effect of the RRC signaling included in the RMSI.

As a third implementation mode, the processor 51 is used for, when running the computer program, executing the following act: receiving OSI from the base station to obtain the time of taking effect of the RRC signaling included in the OSI.

As a fourth implementation mode, the processor 51 is used for, when running the computer program, executing the following act: receiving fourth RRC signaling from the base station to obtain the time of taking effect of the RRC signaling included in the fourth RRC signaling.

As a fifth implementation mode, the processor 51 used for, when running the computer program, executing the following act: receiving control signaling from the base station to obtain the time of taking effect of the RRC signaling included in the control signaling.

### Example Six

An implementation of the present disclosure also provides a computer storage medium, including, for example, the memory 52 shown in FIG. 5, which is applied to a terminal and stores a computer program, the computer program may be executed by the processor 51 of the terminal to accomplish the acts of the aforementioned method. The computer readable storage medium may be a memory such as a FRAM, a ROM, a PROM, an EPROM, an EEPROM, a Flash Memory, a magnetic surface memory, a Compact Disc, or a CD-ROM; or may also be various devices including one or any combination of the above memories, such as a mobile phone, a computer, a tablet device, a personal digital assistant.

The computer storage medium of the implementation of the present disclosure has a computer program stored thereon, wherein when the computer program is run by the processor, the computer program executes the following acts: receiving a broadcast message, configuration information, or control information from a base station to obtain time of taking effect of RRC signaling included in the broadcast message, the configuration information, or the control information; receiving third RRC signaling, and controlling the third RRC signaling to take effect based on the time of taking effect.

As a first implementation mode, when the computer program is run by the processor, the computer program executes the following act: receiving PBCH information from the base station to obtain the time of taking effect of the RRC signaling included in the PBCH information.

As a second implementation mode, when the computer program is run by the processor, the computer program executes the following act: receiving RMSI from the base station to obtain the time of taking effect of the RRC signaling included in the RMSI.

As a third implementation mode, when the computer program is run by the processor, the computer program executes the following act: receiving OSI from the base station to obtain the time of taking effect of the RRC signaling included in the OSI.

As a fourth implementation mode, when the computer program is run by the processor, the computer program executes the following act: receiving fourth RRC signaling from the base station to obtain the time of taking effect of the RRC signaling included in the fourth RRC signaling.

As a fifth implementation mode, when the computer program is run by the processor, the computer program executes the following act: receiving control signaling from the base station to obtain the time of taking effect of the RRC signaling included in the control signaling.

### Example Seven

An implementation of the present disclosure also provides a base station, which includes: a communication component for data transmission, at least one processor and a memory for storing a computer program capable of running on the processor. In this implementation, the processor is used for, when running the computer program, executing the following act: controlling to send a broadcast message, configuration information, or control information to a terminal, wherein the broadcast message, the configuration information or the control information includes time of taking effect of RRC signaling.

As a first implementation mode, the processor is used for, when running the computer program, executing the following act: controlling to send PBCH information to the terminal, wherein the PBCH information includes the time of taking effect of the RRC signaling.

As a second implementation mode, the processor is used for, when running the computer program, executing the following act: controlling to send Residual Minimization System Information RMSI to the terminal, wherein the RMSI includes the time of taking effect of the RRC signaling.

As a third implementation mode, the processor is used for, when running the computer program, executing the following act: controlling to send Other System Information OSI to the terminal, wherein the OSI includes the time of taking effect of the RRC signaling.

As a fourth implementation mode, the processor is used for, when running the computer program, executing the following act: controlling to send first RRC signaling to the terminal, wherein the first RRC signaling includes the time of taking effect of second RRC signaling; the second RRC signaling is RRC signaling sent after the first RRC signaling.

As a fifth implementation mode, the processor is used for, when running the computer program, executing the following act: controlling to send control signaling to the terminal, wherein the control signaling includes the time of taking effect of the RRC signaling.

### Example Eight

An implementation of the present disclosure also provides a computer storage medium, for example, including a memory applied to a base station and storing a computer program, the computer program may be executed by a processor of the base station to accomplish the acts of the aforementioned methods. The computer readable storage medium may be a memory such as a FRAM, a ROM, a PROM, an EPROM, an EEPROM, a Flash Memory, a magnetic surface memory, a Compact Disc, or a CD-ROM; or may also be various devices including one or any combination of the above memories.

The computer storage medium of the implementation of the present disclosure has a computer program stored thereon, wherein when the computer program is executed by the processor, the computer program executes the following act: controlling to send a broadcast message, configuration information, or control information to the terminal, wherein the broadcast message, the configuration information, or the control information includes time of taking effect of RRC signaling.

As a first implementation mode, when the computer program is run by the processor, the computer program executes the following act: controlling to send PBCH information to the terminal, wherein the PBCH information includes the time of taking effect of the RRC signaling.

As a second implementation mode, when the computer program is run by the processor, the computer program executes the following act: controlling to send the Residual Minimization System Information (RMSI) to the terminal, wherein the RMSI includes the time of taking effect of the RRC signaling.

As a third implementation mode, when the computer program is run by the processor, the computer program executes the following act: controlling to send Other System Information (OSI) to the terminal, wherein the OSI includes the time of taking effect of the RRC signaling.

As a fourth implementation mode, when the computer program is run by the processor, the computer program executes the following act: controlling to send first RRC signaling to the terminal, wherein the first RRC signaling includes the time of taking effect of second RRC signaling; the second RRC signaling is RRC signaling sent after the first RRC signaling.

As a fifth implementation mode, when the computer program is executed by the processor, the computer program executes: controlling to send control signaling to the terminal, wherein the control signaling includes the time of taking effect of the RRC signaling.

In several implementations provided by the present disclosure, it should be understood that the disclosed terminal, base station and method may be implemented in other ways. The terminal implementations described above are only illustrative, for example, the division of the units is only a logical function division, and there may be other division manners in actual implementation. For example, multiple units or components may be combined or integrated into another system, or some features may be ignored or not executed. In addition, the mutual coupling or direct coupling or communication connection between various components shown or discussed may be indirect coupling or communication connection through some interface, apparatus or unit, and may be electrical, mechanical or in other forms.

The unit described as a separate component may or may not be physically separated, and the component shown as a unit may or may not be a physical unit, i.e., it may be located in one place or may be distributed over multiple network units. Some or all of the units may be selected according to practical needs to achieve a purpose of the implementations.

In addition, various functional units in various implementations of the present disclosure may be integrated in one processing unit, or various units may be physically present separately, or two or more units may be integrated in one unit. The above-mentioned integrated units may be implemented in a form of hardware or in a form of hardware plus software functional units.

One ordinary skilled in the art can understand that, all or part of the acts for implementing the above method implementations may be accomplished by a program instructing related hardware, and the aforementioned program may be stored in a computer readable storage medium. The program, when executed, performs acts including the above method implementations. The aforementioned storage media include various media capable of storing program codes, such as a removable storage device, ROM, RAM, magnetic disk or optical disk.

Alternatively, the integrated units described above in the present disclosure may be stored in a computer readable storage medium if implemented in a form of software functional module and sold or used as a separate product. Based on this understanding, the technical solution of the implementation of the present disclosure, in essence, or the part contributing to the related art, may be embodied in the form of a software product stored in a storage medium, including several instructions for causing a computer device (which may be a personal computer, a server, or a network device, etc.) to perform all or part of the acts of the methods described in various implementations of the present disclosure. The aforementioned storage media include various media capable of storing program codes, such as a removable storage device, ROM, RAM, magnetic disk or optical disk.

The foregoing are merely exemplary implementations of the present disclosure, but the protection scope of the present disclosure is not limited thereto. Any person skilled in the art can easily conceive changes or substitutions within the technical scope disclosed by the present disclosure. Therefore, the protection scope of the present disclosure should be subject to the protection scope of the claims.

## Claims

1. A method for determining time of taking effect of Radio Resource Control, RRC, signaling, comprising:
receiving, by a terminal, a broadcast message, configuration information, or control information from a base station to obtain a time of taking effect of RRC signaling comprised in the broadcast message, the configuration information, or the control information (201), wherein the time of taking effect of RRC signaling is a time difference between time when the terminal receives an RRC signaling and time when the RRC signaling takes effect; and
receiving, by the terminal, third RRC signaling, and controlling the third RRC signaling to take effect based on the time of taking effect (202).

2. The method of claim 1, wherein, receiving, by the terminal, the broadcast message, the configuration information, or the control information from the base station to obtain the time of taking effect of the RRC signaling comprised in the broadcast message, the configuration information, or the control information (201), comprises:
receiving, by the terminal, Physical Broadcast Channel, PBCH, information from the base station to obtain the time of taking effect of the RRC signaling comprised in the PBCH information.

3. The method of claim 1, wherein, receiving, by the terminal, the broadcast message, the configuration information, or the control information from the base station to obtain the time of taking effect of the RRC signaling comprised in the broadcast message, the configuration information, or the control information (201), comprises:
receiving, by the terminal, Residual Minimization System Information, RMSI, from the base station to obtain the time of taking effect of the RRC signaling comprised in the RMSI.

4. The method of claim 1 wherein, receiving, by the terminal, the broadcast message, the configuration information, or the control information from the base station to obtain the time of taking effect of the RRC signaling comprised in the broadcast message, the configuration information, or the control information (201), comprises:
receiving, by the terminal, Other System Information, OSI, from the base station to obtain the time of taking effect of the RRC signaling comprised in the OSI.

5. The method of claim 1, wherein, receiving, by the terminal, the broadcast message, the configuration information, or the control information from the base station to obtain the time of taking effect of the RRC signaling comprised in the broadcast message, the configuration information, or the control information (201), comprises:
receiving, by the terminal, fourth RRC signaling from the base station to obtain the time of taking effect of the RRC signaling comprised in the fourth RRC signaling.

6. The method of claim 1, wherein, receiving, by the terminal, the broadcast message, the configuration information, or the control information from the base station to obtain the time of taking effect of the RRC signaling comprised in the broadcast message, the configuration information, or the control information (201), comprises:
receiving, by the terminal, control signaling from the base station to obtain the time of taking effect of the RRC signaling comprised in the control signaling.

7. A terminal, comprising a receiving unit (41), an obtaining unit (42), and a controlling unit (43); wherein,
the receiving unit (41) is configured to receive a broadcast message, configuration information, or control information from a base station, and further configured to receive third Radio Resource Control (RRC) signaling;
the obtaining unit (42) is configured to obtain a time of taking effect of RRC signaling comprised in the broadcast message, the configuration information, or the control information received by the receiving unit, wherein the time of taking effect of RRC signaling is a time difference between time when the terminal receives an RRC signaling and time when the RRC signaling takes effect;
the controlling unit (43) is configured to control the third RRC signaling received by the receiving unit to take effect based on the time of taking effect obtained by the obtaining unit.

8. The terminal of claim 7, wherein, the receiving unit (41) is configured to receive Physical Broadcast Channel, PBCH, information from the base station;
the obtaining unit is configured to obtain the time of taking effect of the RRC signaling comprised in the PBCH information received by the receiving unit.

9. The terminal of claim 7, wherein, the receiving unit (41) is configured to receive Residual Minimization System Information, RMSI, from the base station;
the obtaining unit is configured to obtain the time of taking effect of the RRC signaling comprised in the RMSI received by the receiving unit.

10. The terminal of claim 7, wherein, the receiving unit (41) is configured to receive Other System Information, OSI, from the base station;
the obtaining unit is configured to obtain the time of taking effect of the RRC signaling comprised in the OSI received by the receiving unit.

11. The terminal of claim 7, wherein, the receiving unit (41) is configured to receive fourth RRC signaling from the base station;
the obtaining unit is configured to obtain the time of taking effect of the RRC signaling comprised in the fourth RRC signaling received by the receiving unit.

12. The terminal of claim 7, wherein, the receiving unit (41) is configured to receive control signaling from the base station;
the obtaining unit is configured to obtain the time of taking effect of the RRC signaling comprised in the control signaling received by the receiving unit.

## Patentansprüche

1. Verfahren zum Bestimmen von Zeit des Wirksamwerdens von "Radio Resource Control"- bzw. RRC-Signalisierung, umfassend:
Empfangen einer Rundsendenachricht, von Konfigurationsinformationen oder Steuerinformationen von einer Basisstation durch ein Endgerät, um eine Zeit des Wirksamwerdens von RRC-Signalisierung zu erhalten, die in der Rundsendenachricht, den Konfigurationsinformationen oder den Steuerinformationen (201) enthalten ist, wobei die Zeit des Wirksamwerdens der RRC-Signalisierung eine Zeitdifferenz zwischen der Zeit, zu der das Endgerät eine RRC-Signalisierung empfängt, und der Zeit, zu der die RRC-Signalisierung wirksam wird, ist; und
Empfangen von dritter RRC-Signalisierung durch das Endgerät und Steuern der dritten RRC-Signalisierung zum Wirksamwerden auf der Basis der Zeit des Wirksamwerdens (202) .

2. Verfahren nach Anspruch 1, wobei Empfangen der Rundsendenachricht, der Konfigurationsinformationen oder der Steuerinformationen von der Basisstation durch das Endgerät, um die Zeit des Wirksamwerdens der RRC-Signalisierung zu erhalten, die in der Rundsendenachricht, den Konfigurationsinformationen oder den Steuerinformationen (201) enthalten ist, Folgendes umfasst:
Empfangen von "Physical Broadcast Channel"- bzw. PBCH-Informationen von der Basisstation durch das Endgerät, um die Zeit des Wirksamwerdens der RRC-Signalisierung zu erhalten, die in den PBCH-Informationen enthalten ist.

3. Verfahren nach Anspruch 1, wobei Empfangen der Rundsendenachricht, der Konfigurationsinformationen oder der Steuerinformationen von der Basisstation durch das Endgerät, um die Zeit des Wirksamwerdens der RRC-Signalisierung zu erhalten, die in der Rundsendenachricht, den Konfigurationsinformationen oder den Steuerinformationen (201) enthalten ist, Folgendes umfasst:
Empfangen von "Residual Minimization System Information" RMSI von der Basisstation durch das Endgerät, um die Zeit des Wirksamwerdens der RRC-Signalisierung, die in den RMSI enthalten ist, zu erhalten.

4. Verfahren nach Anspruch 1, wobei Empfangen der Rundsendenachricht, der Konfigurationsinformationen oder der Steuerinformationen von der Basisstation durch das Endgerät, um die Zeit des Wirksamwerdens der RRC-Signalisierung zu erhalten, die in der Rundsendenachricht, den Konfigurationsinformationen oder den Steuerinformationen (201) enthalten ist, Folgendes umfasst:
Empfangen von "Other System Information" OSI von der Basisstation durch das Endgerät, um die Zeit des Wirksamwerdens der RRC-Signalisierung zu erhalten, die in den OSI enthalten ist.

5. Verfahren nach Anspruch 1, wobei Empfangen der Rundsendenachricht, der Konfigurationsinformationen oder der Steuerinformationen von der Basisstation durch das Endgerät, um die Zeit des Wirksamwerdens der RRC-Signalisierung zu erhalten, die in der Rundsendenachricht, den Konfigurationsinformationen oder den Steuerinformationen (201) enthalten ist, Folgendes umfasst:
Empfangen von vierter RRC-Signalisierung von der Basisstation durch das Endgerät, um die Zeit des Wirksamwerdens der RRC-Signalisierung zu erhalten, die in der vierten RRC-Signalisierung enthalten ist.

6. Verfahren nach Anspruch 1, wobei Empfangen der Rundsendenachricht, der Konfigurationsinformationen oder der Steuerinformationen von der Basisstation durch das Endgerät, um die Zeit des Wirksamwerdens der RRC-Signalisierung zu erhalten, die in der Rundsendenachricht, den Konfigurationsinformationen oder den Steuerinformationen (201) enthalten ist, Folgendes umfasst:
Empfangen von Steuersignalisierung von der Basisstation durch das Endgerät, um die Zeit des Wirksamwerdens der RRC-Signalisierung zu erhalten, die in der Steuersignalisierung enthalten ist.

7. Endgerät, das eine Empfangseinheit (41), eine Erhalteeinheit (42) und eine Steuerungseinheit (43) umfasst; wobei
die Empfangseinheit (41) ausgelegt ist zum Empfangen einer Rundsendenachricht, von Konfigurationsinformationen oder von Steuerinformationen von einer Basisstation und ferner ausgelegt ist zum Empfangen von dritter "Radio Resource Control"- bzw. RRC-Signalisierung;
die Erhalteeinheit (42) ausgelegt ist zum Erhalten einer Zeit des Wirksamwerdens von RRC-Signalisierung, die in der Rundsendenachricht, den Konfigurationsinformationen oder den Steuerinformationen, die durch die Empfangseinheit empfangen werden, enthalten ist, wobei eine Zeit des Wirksamwerdens von RRC-Signalisierung eine Zeitdifferenz zwischen der Zeit, zu der das Endgerät eine RRC-Signalisierung empfängt, und der Zeit, zu der die RRC-Signalisierung wirksam wird, ist;
die Steuerungseinheit (43) ausgelegt ist zum Steuern der durch die Empfangseinheit empfangenen dritten RRC-Signalisierung zum Wirksamwerden auf der Basis der Zeit des Wirksamwerdens, die durch die Erhalteeinheit erhalten wird.

8. Endgerät nach Anspruch 7, wobei die Empfangseinheit (41) ausgelegt ist zum Empfangen von "Physical Broadcast Channel"- bzw. PBCH-Informationen von der Basisstation;
die Erhalteeinheit ausgelegt ist zum Erhalten der Zeit des Wirksamwerdens der RRC-Signalisierung, die in den durch die Empfangseinheit empfangenen PBCH-Informationen enthalten ist.

9. Endgerät nach Anspruch 7, wobei die Empfangseinheit (41) ausgelegt ist zum Empfangen von "Residual Minimization System Information" RMSI von der Basisstation;
die Erhalteeinheit ausgelegt ist zum Erhalten der Zeit des Wirksamwerdens der RRC-Signalisierung, die in den durch die Empfangseinheit empfangenen RMSI enthalten ist.

10. Endgerät nach Anspruch 7, wobei die Empfangseinheit (41) ausgelegt ist zum Empfangen von "Other System Information" OSI von der Basisstation;
die Erhalteeinheit ausgelegt ist zum Erhalten der Zeit des Wirksamwerdens der RRC-Signalisierung, die in den durch die Empfangseinheit empfangenen OSI enthalten ist.

11. Endgerät nach Anspruch 7, wobei die Empfangseinheit (41) ausgelegt ist zum Empfangen von vierter RRC-Signalisierung von der Basisstation;
die Erhalteeinheit ausgelegt ist zum Erhalten der Zeit des Wirksamwerdens der RRC-Signalisierung, die in der durch die Empfangseinheit empfangenen vierten RRC-Signalisierung enthalten ist.

12. Endgerät nach Anspruch 7, wobei die Empfangseinheit (41) ausgelegt ist zum Empfangen von Steuersignalisierung von der Basisstation;
die Erhalteeinheit ausgelegt ist zum Erhalten der Zeit des Wirksamwerdens der RRC-Signalisierung, die in der durch die Empfangseinheit empfangenen Steuersignalisierung enthalten ist.

## Revendications

1. Procédé de détermination d'un temps d'entrée en vigueur d'une signalisation de commande de ressource radio, RRC, comprenant :
la réception, par un terminal, d'un message de diffusion, d'informations de configuration ou d'information de commande à partir d'une station de base pour obtenir une temps d'entrée en vigueur d'une signalisation RRC comprise dans le message de diffusion, les informations de configuration ou les information de commande (201), le temps d'entrée en vigueur d'une signalisation RRC étant une différence de temps entre le moment où le terminal reçoit une signalisation RRC et le moment où la signalisation RRC entre en vigueur ; et
la réception, par le terminal, d'une troisième signalisation RRC, et la commande de la troisième signalisation RRC pour qu'elle entre en vigueur au temps d'entrée en vigueur (202).

2. Procédé selon la revendication 1, dans lequel, la réception, par le terminal, du message de radiodiffusion, des informations de configuration ou des informations de commande à partir de la station de base pour obtenir le temps d'entrée en vigueur de la signalisation RRC comprise dans le message de radiodiffusion, les informations de configuration ou les informations de commande (201), comprend :
la réception, par le terminal, d'informations de canal de diffusion physique, PBCH, à partir de la station de base pour obtenir le temps d'entrée en vigueur de la signalisation RRC comprise dans les informations de PBCH.

3. Procédé selon la revendication 1, dans lequel, la réception, par le terminal, du message de diffusion, des informations de configuration, ou des informations de commande à partir de la station de base pour obtenir le temps d'entrée en vigueur de la signalisation RRC comprise dans le message de diffusion, les informations de configuration, ou les informations de commande (201), comprend :
la réception, par le terminal, d'informations de système de minimisation résiduelles, RMSI, à partir de la station de base pour obtenir le temps d'entrée en vigueur de la signalisation RRC comprise dans les RMSI.

4. Procédé selon la revendication 1 dans lequel, la réception, par le terminal, du message de diffusion, des informations de configuration, ou des informations de commande à partir de la station de base pour obtenir le temps d'entrée en vigueur de la signalisation RRC comprise dans le message de diffusion, les informations de configuration, ou les informations de commande (201), comprend :
la réception, par le terminal, d'autres informations système, OSI, à partir de la station de base pour obtenir le temps d'entrée en vigueur de la signalisation RRC comprise dans les OSI.

5. Procédé selon la revendication 1, dans lequel, la réception, par le terminal, du message de radiodiffusion, des informations de configuration, ou des informations de commande de la station de base pour obtenir le temps d'entrée en vigueur de la signalisation RRC comprise dans le message de radiodiffusion, les informations de configuration, ou les informations de commande (201), comprend :
la réception, par le terminal, d'une quatrième signalisation RRC à partir de la station de base pour obtenir le temp d'entrée en vigueur de la signalisation RRC comprise dans la quatrième signalisation RRC.

6. Procédé selon la revendication 1, dans lequel, la réception, par le terminal, du message de diffusion, des informations de configuration, ou des informations de commande à partir de la station de base pour obtenir le temps d'entrée en vigueur de la signalisation RRC comprise dans le message de radiodiffusion, les informations de configuration, ou les informations de commande (201), comprend :
la réception, par le terminal, d'une signalisation de commande à partir de la station de base pour obtenir le temps d'entrée en vigueur de la signalisation RRC comprise dans la signalisation de commande.

7. Terminal, comprenant une unité de réception (41), une unité d'obtention (42) et une unité de commande (43) ; dans lequel,
l'unité de réception (41) est configurée pour recevoir un message de diffusion, des informations de configuration ou des informations de commande à partir d'une station de base, et configurée en outre pour recevoir une troisième signalisation de commande de ressources radio (RRC) ;
l'unité d'obtention (42) est configurée pour obtenir un temps d'entrée en vigueur d'une signalisation RRC comprise dans le message de radiodiffusion, les informations de configuration ou les informations de commande reçues par l'unité de réception, dans lequel le temps d'entrée en vigueur d'une signalisation RRC est une différence de temps entre le moment où le terminal reçoit une signalisation RRC et le moment où la signalisation RRC entre en vigueur ;
l'unité de commande (43) est configurée pour commander la troisième signalisation RRC reçue par l'unité de réception pour qu'elle entre en vigueur au temp d'entrée en vigueur obtenu par l'unité d'obtention.

8. Terminal selon la revendication 7, dans lequel l'unité de réception (41) est configurée pour recevoir des informations de canal de diffusion physique, PBCH, à partir de la station de base ;
l'unité d'obtention est configurée pour obtenir le temps d'entrée en vigueur de la signalisation RRC comprise dans les informations de PBCH reçues par l'unité de réception.

9. Terminal selon la revendication 7, dans lequel l'unité de réception (41) est configurée pour recevoir des informations de système de minimisation résiduelles, RMSI, à partir de la station de base ;
l'unité d'obtention est configurée pour obtenir le temps d'entrée en vigueur de la signalisation RRC comprise dans les RMSI reçues par l'unité de réception.

10. Terminal selon la revendication 7, dans lequel l'unité de réception (41) est configurée pour recevoir d'autres informations système, OSI, à partir de la station de base ;
l'unité d'obtention est configurée pour obtenir le temps d'entrée en vigueur de la signalisation RRC comprise dans les OSI reçues par l'unité de réception.

11. Terminal selon la revendication 7, dans lequel l'unité de réception (41) est configurée pour recevoir une quatrième signalisation RRC à partir de la station de base ;
l'unité d'obtention est configurée pour obtenir le temps d'entrée en vigueur de la signalisation RRC comprise dans la quatrième signalisation RRC reçue par l'unité de réception.

12. Terminal selon la revendication 7, dans lequel l'unité de réception (41) est configurée pour recevoir une signalisation de commande à partir de la station de base ;
l'unité d'obtention est configurée pour obtenir le temps d'entrée en vigueur de la signalisation RRC comprise dans la signalisation de commande reçue par l'unité de réception.
